Europäisches Patentamt

(19) European Patent Office

Office européen des brevets

(11) Veröffentlichungsnummer: **0 171 549**
**B1**

(12) **EUROPÄISCHE PATENTSCHRIFT**

(45) Veröffentlichungstag der Patentschrift:
**31.05.89**

(21) Anmeldenummer: **85107714.9**

(22) Anmeldetag: **21.06.85**

(51) Int. Cl.⁴: **A 63 C 5/056,** A 63 C 5/12

(54) Verfahren zur Herstellung von Skilaufsohlenbelägen.

(30) Priorität: **14.08.84 DD 266229**

(43) Veröffentlichungstag der Anmeldung:
**19.02.86 Patentblatt 86/8**

(45) Bekanntmachung des Hinweises auf die Patenterteilung:
**31.05.89 Patentblatt 89/22**

(84) Benannte Vertragsstaaten:
**AT CH DE FR IT LI SE**

(56) Entgegenhaltungen:
**CH-A-567 427**
**DE-A-2 748 177**
**DE-A-3 021 022**
**US-A-4 093 268**

(73) Patentinhaber: **VEB Kombinat Sportgeräte**
**Schmalkalden, Strasse der DSF 124, DDR- 6080**
**Schmalkalden (DD)**

(72) Erfinder: **Hildenbrandt, Lothar, Dipl.- Wirt.,**
**Mühlbach 2, DDR- 6086 Pappenheim (DD)**
Erfinder: **Schöneburg, Thomas, Dr. rer. nat.,**
**Leninstrasse 53, DDR- 6081 Möckers (DD)**
Erfinder: **Marinow, Slaweyko, Dr. sc. techn.,**
**Block 152, Haus 2, DDR- 4090 Halle- Neustadt (DD)**
Erfinder: **Schmalz, Hans- Dieter, Dr.- Ing.,**
**Hauptstrasse 56, DDR- 6081 Mittelschmalkalden**
**(DD)**
Erfinder: **Zimmermann, Jürgen, Dipl.- Phys., Am**
**Walperloh 9, DDR- 6080 Schmalkalden (DD)**

(74) Vertreter: **Patentanwälte Beetz sen. - Beetz jun.**
**Timpe - Siegfried - Schmitt- Fumian,**
**Steinsdorfstrasse 10, D-8000 München 22 (DE)**

EP 0 171 549 B1

LIBER, STOCKHOLM 1989

## Beschreibung

Die Erfindung betrifft ein Verfahren zur Herstellung von Skilaufsohlenbelägen aus auf der Grundlage an sich bekannter Verfahren der Extrusions- und Kalandiertechnik hergestellten Thermoplastbahnen, auf die bei Temperaturen von 70°C bis 250°C Modifikationsmaterialien aufgebracht und eingewalzt werden.

Es sind im Stand der Technik die verschiedensten Verfahren zur Herstellung von Skilaufsohlenbelägen bekannt. Diese Verfahren gehen in Bezug auf das eingesetzte Laufsohlenbelagmaterial einen Kompromiß zwischen den gewünschten Eigenschaften bei der bestimmungsgemäßen Verwendung wie gute Gleiteigenschaften, hohes Wachsaufnahme- und Wachshaltevermögen, hohe Verschleißfestigkeit und den zwingend erforderlichen Materialeigenschaften in Rahmen der notwendigen Be- und Verarbeitung, wie gute Verklebbarkeit mit anderen Baugruppen, gute spanlose bzw. spangebende Verformbarkeit und anderes mehr, ein. So wird in der DE-OS-1 578 922 vorgeschlagen, mittels geometrischer Profilierungen im Steigbereich des Ski gute Gleiteigenschaften mit guten Steigeigenschaften zu kombinieren. Um solche Profilierungen gemäß DE-OS-1 578 922 zu erzielen, müssen jedoch Polyethylentypen (PE-Typen) mit einem relativ hohen Schmelzindex verwendet werden, da sonst eine Formgebung in der gewünschten Art in effektiver Weise nicht möglich ist.

Diese Polyethylentypen sind jedoch für das ihnen eigene schlechte Wachsaufnahmevermögen bekannt. Daher ist es nicht möglich, über eine hinreichend große Laufdistanz die Gleiteigenschaften aufgrund von in den Gleitbereichen des Ski eingebrachten Gleitwachsen wesentlich zu verbessern, um so die durch die Unebenheiten des profilierten Bereiches bedingte Abnahme der Gleitfreudigkeit des Belages zu kompensieren. Darüber hinaus werden zwar mit dem in der DE-OS-1 578 922 beschriebenen Verfahren bei Einsatz von PE-Typen mit hohen Schmeizindex Laufbeläge von hervorragender Scharfkantigkeit erzielt, jedoch sind gerade diese PE-Typen für ihre geringe Verschleißfestigkeit bekannt.

Darin liegt die Ursache, daß solche nach dem o.g. Verfahren hergestellten Ski oftmals, bereits nach kurzer Einsatzzeit, insbesondere dann, wenn die Loipe nicht frei von Eis, Steinen, Sand und Pflanzanteilen ist, ihre guten Steigeigenschaften verlieren.

Andere im Stand der Technik bekannte Verfahren beschreiben die homogene Einarbeitung von Fremdmaterlien bzw. modifizierter PE-Typen in die Belagbahn, so DE-OS-2 825 406, AT-PS-374 685, CH-PS-579 929 und DE-A-3 021 022. Diese so hergestellten Beläge haben entweder durch die Fremdmaterialien beeinträchtigte Gleiteigenschaften, verfügen über keinen optimierten Verbund Fremdstoff-Polyethylen und/oder sind nur mit kostenintensiven Werkstoffen und aufwendigen Mehrstufenprozessen realisierbar.

Die US-AS-4 093 268 beschreibt einen Ski mit einem Kern, der eine Basisschicht aus einer starren Plastgrundmasse sowie ca. 5 bis ca. 45 Gewichtsprozent eines Thermoplasts, wasserlöslichen Polymers, auffweist. Die Basisschicht stellt eine Oberfläche zur Verfügung, bei der das wasserlösliche Polymer bei Wasserkontakt aus der Plastgrundmasse herausgelöst wird. Damit wird auf der Schichtoberfläche ein Grenzschmiermittelfilm erzeugt.

Darüber hinaus ist aus der DE-OS-2 651 991 eine Laufsohle bekannt, bei der Glaskugeln in die Laufsohle eingearbeitet sind, um hervorragende Gleiteigenschaften durch das Gleiten von Glas auf Schnee zu erzielen. Auch diese Ausführungsform hat den bereits beschriebenen Nachteil, daß aufgrund der natürlichen Beschaffenheit der Loipe (Verunreinigung, wie Eis, Sand, Steine) die Beanspruchung des erfindungsgemäßen Belages so groß wird, daß die Glaskugeln zerstört werden und/oder ausbrechen, wodurch der Belegs bereits nach kurzer Einsatzzeit sine guten Gleiteigenschaften verliert.

Ziel der Erfindung ist es, ein Verfahreen zu entwickeln, weches die Herstellung einer Skilaufsohle mit beidseitige unterschiedlichen (in Längs- und/oder Querrichtung variabel gestaltbaren Skilaufsohlenbelages) definierten physikalischen und chemischen Eigenschaften ermöglicht.

Ursache der Nachteile der im Stand der Technik bekannten Skilaufsohlenbeläge ist die zwingend erforderliche Verwendung eines einheitlichen Werkstoffes aufgrund der bekannten Verfahren der Extrusions- und Kalandiertechnik.

Aufgabe der Erfindung ist es, ein Verfahren zur Herstellung von Skilaufsohlenbelägen aus auf der Grundlage an sich bekannter Verfahren der Extrusions- und Kalandiertechnik hergestellten Thermoplastbahnen, auf die bei Temperaturen von 70°C bis 250°C Modifikationsmaterialien aufgebracht und eingewalzt werden, zu schaffen, bei dem nach dem Extrudieren und Kalandieren die Werkstoffeigenschaften über die Skilängs- und/oder -querrichtung bereichsweise beidseitig so verändert werden, da diese selbst bei extremer Beanspruchung des Skibelages z. B. durch Verunreinigung in der Loipe irreversibel sind.

Diese Aufgabe wird erfindungsgemäß dadurch gelöst, daß das Modifikationsmaterial über eine oder mehrere im Bereich eines Kalanders angeordnete, mit einer Steuerung zum wegabhängigen Anlegen und Abheben von einer Gegenwalze verbundenen vakuumbeaufschlagten Hohlwalze auf die Thermoplastbahn aufgebracht wird, wobei das Modifikationsmaterial durch die Vakuumbeaufschlagung der Hohlwalze aus einer Materialbevorratungs- und Übergabevorrichtung entnommen wird, sich bei Drehung der Hohlwalze über den Umfang ausdehnt und bei Erreichen des vorbestimmten Modifikationsbereiches der Thermoplastbahn auf diese bei gleicher Umfangsgeschwindigkeit der Hohlwalze auf der auf den Kalander geführten Thermoplastbahn übertragen wird und der Übertragungsvorgang nach Durchlauf des Modifikationsbereiches nach Absetzen und und Beendigung der Drehbewegung der Hohlwalze beendet ist, und daß die so ausgerüstete Thermoplastbahn zur intensiven Einarbeitung des Modifikationsmaterials dem anschließenden Kalanderprozeß zugeführt wird.

Dabei ist von Vorteil, daß die Steuerung der Hohlwalze etappenweise erfolgt, wobei nach Vakuumbeaufschlagung die Hohlwalze zur Aufnahme des Modifikationsmaterials an der Materialbevorratungs- und Übergabevorrichtung vorbeigeführt und bei Erreichen des Modifikationsbereiches der durch, den Kalander geführten Thermoplastbahn auf der Linie des kürzesten Abstandes der Gegenwalze von der Hohlwalze, deren Vakuumbeaufschlagung unterbrochen wird, auf die Thermoplastbahn unter gleichzeitiger Aufnahme der Rotationsbewegung, abgelegt und nach Durchlauf des Modifizierungsbereiches auf der Linie des kürzesten Abstandes der Gegenwalze und der Hohlwalze bei Beendigung der Rotationsbewegung abgehoben wird.

Im Sinne der Erfindung ist es, wenn unterschiedliche Modifizierungsmaterialien über voneinander unabhängige Hohlwalzen bereichsweise beidseitig auf den Modifizierungsbereich der Thermoplastbahn aufgetragen und eingearbeitet werden.

Erfindungswesentlich ist, daß als Modifikationsmaterialien anorganische (Minerale, Salze, Metalle) oder organische (Wachse, Farben, Aktivatoren, Inhibitoren) Werkstoffe bzw. anorganische oder organische Hochpolymere in fasriger, körniger und/oder pulverförmiger, regelmäßiger und/oder unregelmäßiger Struktur und als Haftvermittler bei den Verarbeitungstemperaturen wirksame Reaktionsphase z. B. Epoxidharze bzw. aufschmelzende Polymerunmantelungen eingesetzt werden. Dadurch wird gezielt erreicht, daß die Haftung dieser Modifikationsmaterialien zum umgebenden Thermoplast, meistens Polyethylen, verbessert wird.

Geeignet sind z. B. bestimmte Polyethylentypen, die bei der Modifizierungstemperatur, d.h. an die Prozeßtemperatur der Belagherstellung angepaßt sind bzw. deren optimale Reaktionstemperatur durch Temperierung der Modifizierungswalze und/oder der Gegendruckwalze, ggf. innen durch IR-Linearstrahler, erreicht wird. Möglich ist es auch, die Modifizierungsmaterialien in seperaten Anlagen in bekannter Weise in eine Folie aus vorzugsweise Polyethylen einarbeiten zu lassen und diese Folie selbst als hochgefüllte Modifizierungsfolie über die Modifizierungswalze auf den zu modifizierenden Laufbelag in den beabsichtigten Positionen anzudrücken und zu verschmelzen.

Aufgrund der hierfür notwendigen höheren Temperaturen im Bereich zwischen 160°C und 250°C je nach PE-Type ist für die Modifizierungsvorrichtung eine Position möglichst nahe am Extruder günstiger, ggf. ist auch die hochgefüllte Modifizierungsfolie vorzutemperieren auf ca. 70 bis 120°C.

Kennzeichnend ist, daß die Modifikationsmaterialien bereichsweise auf die Belagbahn mittels im Stand dar Technik an sich bekannten Vorrichtungen, wie z. B. Vakuumwalzen, Rakel bzw. aufgrund von elektrischen oder auf elektrostatischen Kräften beruhenden Wirkung, aufgebracht werden, wobei wesentlich ist, daß unmittelbar darauffolgend diese aufgebrachten Materialien in die noch zähflüssige bis plastische Belagbahn durch Walzen- oder Bandkalender eingearbeitet werden, wodurch sich ein stabiler physikalischer und/oder chemischer Verbund des Modifizierungsmaterials mit der Belagbahn ergibt. Aufgrund einer bereichsweisen unterschiedlichen Modifizierung, welche beispielsweise zeit- und/oder wegabhängig erfolgen kann wird es möglich, die Gleiteigenschaften des Skibelages durch die Einerbeitung von

- hochgleitfreudigen aber an sich verklebungsunfreundlichen PE-Partikeln oder anderen Polymerteilchen mit genannten Eigenachaften
- wachshaltigen Polymerteilchen, die als Belag nicht verklebbar wären
- ultrahochmolekularen Polymerpartikeln, die sonst nur im aufwendigen Sinter-Schäl-Mehrstufenprozeß zu Skibelägen verarbeitet sind

in die Gleitzonen des Belages zu verbessern, ohne die Verklebbarkeit zu beeinträchtigen, unter Beibehaltung des für das Prägen wichtigen Materialeigenschaften der extrudierten Folienbahu.

Kennzeichnend ist weiterhin, daß die Modifizierung, welche bereichsweise unterschiedlich erreicht wird, Grundlage dafür ist, daß die genannten unterschiedlichen Modifikationsmaterialien gezielt im Steigbereich eingearbeitet werden und somit beispielsweise die Verschleißfestigkeit der Profilierung wesentlich erhöht wird, wodurch eine lange Eigenschaftskonstanz der Steighilfe gewährleistet werden kann. Gleichfalls wird so erreicht, daß aufgrund der geringeren Abnutzung die Anfangsprofilhöhen geringer gewählt werden können. Dadurch ist die Gefahr der Beeinträchtigung des Gleitens aufgrund der Berührun des Schnees durch die exponiertesten Steighilfenbereiche geringer und Gleiteigenschaften des Skis insgesamt besser. Bekanntlich ragen die steigwirksamen profilierten Bereiche ca. 0,2 mm über das Laufsohlenniveau der Gleitbereiche hinaus. Jedoch hat bei dieser Höhe der "Wachsfuge" der Ski seine konstruktionsbedingte Härte noch nicht erreicht. Dieser Wert wird erst im Bereich 0,1 bis 0,05 mm Wachsfugenhöhe gemessen. Mit der bereits genannten verringerten Steighilfenhöhe auf ca. 0,03 bis 0,15 mm verringert sich also die Berührung des Schnees in der Gleitphase erheblich.

Kennzeichnend ist weiterhin, daß die Modifizierung sowohl unmittelbar vor und/oder während des Kalandrierens als auch in einer separaten Prozeßstufe nach nochmaligem Erwärmen der unmodifizierten Plastbahn erfolgen kann. Eine solche Modifizierung zu einen späteren Zeitpunkt ermöglicht eine variable Anpassungen Gegebenheiten hinsichtlich spezieller Anlagentechnik und Materialverfügbarkeit. So kann erstmalig der hinsichtlich notwendiger Skibelageigenschaften über die meisten Erfahrungen verfügende Skiproduzent eine einfache durchgängige Modifizierung (Präparierung) des Belages vornehmen, ohne selbst über Extrusions- und Kalandriertechnik verfügen zu müssen. Auch ist in dieser Weise eine bestimmte Ausrichtung und Fixierung der eingearbeiteten Modifikationsmaterialien durch Recken, Nachtempern und ähnliche Behandlungsverfahren leichter möglich.

Mit den beschriebenen Modifizierungsvarianten sowohl des Gleit- als auch des Steigbereiches ergibt sich erfindungsgemäß die Möglichkeit, die Eigenschaften der Oberfläche durchgängig nach Zonen getrennt an die Anforderungen anzupassen und für den Grundkörper des Belages von den Anforderungen unabhängige gut verfügbare bzw. kostengünstige Polymertypen einzusetzen.

Nachstehend wird die Erfindung anhand eines Ausführungsbeispieles mit zwei Zeichnungen näher erläutert.

Es zeigen:

Fig. 1: den prinzipiellen Aufbau des Modifizierungs-Präge-Systems, hier mittels eines Dreiwalzenkalanders,

Fig. 2: die separate Darstellung des Modifizierungswerkzeuges speziell einer Vakuumwalze.

Die kontinuierliche Einarbeitung der Modifikationsmaterialien wird dadurch erreicht, daß am Walzen- oder Bandkalander oder in dessen unmittelbarer Nähe eine oder mehrere Zusatzeinrichtungen, je nach Anzahl der zu erreichenden Modifizierungen, installiert werden, die keinerlei Auswirkungen auf den Extrusions- und Kalandierprozeß haben. Diese Zusatzeinrichtungen bestehen jeweils aus einer fein-porösen, ggf. profilierten Hohlwalze, einer Steuerung zum wegabhängigen Anlegen und Abheben der Hohlwalze von der an der Gegenwalze anliegenden Folienbahn, einer Vakuumanlage zum Anlegen eines Vakuums an die Hohlwalze, Schwebstoffabscheider zwischen Hohlwalze und Vakuumpumpe, Materialbevorratungs- und Übergabevorrichtung zum Beschicken der äußeren Hohlwalzenoberfläche mit dem Modifikationsmaterial und einem stillstehenden Absperrschieber auf der inneren Oberfläche des Walzenmantels zum partiellen Absperren des Vakuums genau gegenüber der zu modifizierenden Laufbelagsstelle.

Die Modifizierung des Laufbelages erfolgt, indem zunächst Vakuum an die Hohlwalze angelegt wird. Durch das Vakuum wird das zerkleinerte Modifikationsmaterial der Materialbevorratungs- und Übergabevorrichtung entnommen. Dieses Modifikationsmaterial bildet durch Abdichten der Poren der Vakuumalze eine annähernd monokörnige Schicht, die sich entsprechend der Drehung des Hohlwalzenmantels über den Umfang ausdehnt. Erreicht nun der Abschnitt der Folienbahn, der modifiziert und ggf. profiliert werden soll, die Linie des kürzesten Abstandes der Gegenwalze von der Hohlwalze fährt die oberflächig mit dem Modifikationsmaterial versehene Hohlwalze gegen die thermoplastische Folienbahn. Entsprechend der gefertigten Belagstärke von 0,4. .. 3 mm wird die Hohlwalze so gesteuert, daß sie bei Berührung der Folienbahn in Rotation versetzt wird. Die Umfangsgeschwindigkeit der Hohlwalze ist gleich der Umfangsgeschwindigkeit der zu modifizierenden Oberfläche der thermoplastischen Folienbahn auf der Gegenwalze.

Im Laufe ihrer Drehung gibt die Hohlwalze unter Ausnutzung des Andruckes, der Bindefreundlichkeit der thermoplastischen Folienbahn und des hier größtenteils abgesperrten Vakuums das am ihrer Oberfläche zuvor durch das Vakuum gebundene Modifikationsmaterial an die Folienbahn ab. Nach Durchlauf des zu modifizierenden Bereiches hebt die Hohlwalze wieder ab und setzt in ihrer Drehbewegung aus.

Die mittels Extruder und Breitschlitzdüse 1 erzeugte thermoplastische Folienbahn 2 wird zu einem Kalander 3 geleitet. In Materialbevorratungsbehälter 4 befindet sich das vorgetrocknete ggf. mit einem Haftvermittler ummantelte Modifikationsmaterial 5, das über eine, die Hubbewegung der Hohlwalze 6 ausgleichende flexible Übergabevorrichtung 7 der Hohlwalze 6 geführt wird. Die Vakuumpumpe 8 erzeugt in der Hohlwalze 6 lediglich ein zum Fixieren des Modifikationsmaterials 5 auf dem äußeren Mantel minimal notwendiges über einen Regler 9 gesteuertes Vakuum.

Indem sich die Hohlwalze 6 an der flexiblen Übergabevorrichtung 7 vorbei dreht, beschichtet sie sich durch das in feinen Poren 16 des Hohlwalzenmantels anliegende Vakuum mit dem Modifikationsmaterial. Die Hohlwalze 6 wird so gesteuert, daß unmittelbar bevor die Modifikationsmaterialschicht die vakuumfreie Stelle am Vakuumabsperrschieber 10 erreicht, die Rotation aussetzt. Mit Erreichen des Beginns des zu modifizierenden Bereiches der thermoplastischen Folienbahn, die mit ca. 1 m/min durch den Kalander läuft, der Linie des kürzesten Abstandes zwischen Hohlwalzen 6 und Gegenwalze 11, bewegt sich die Hohlwalze gegen die Folienbahn 2 und nimmt die Drehbewegung auf. Dabei gibt sie das Modifikationsmaterial an die Folienbahn 2 ab.

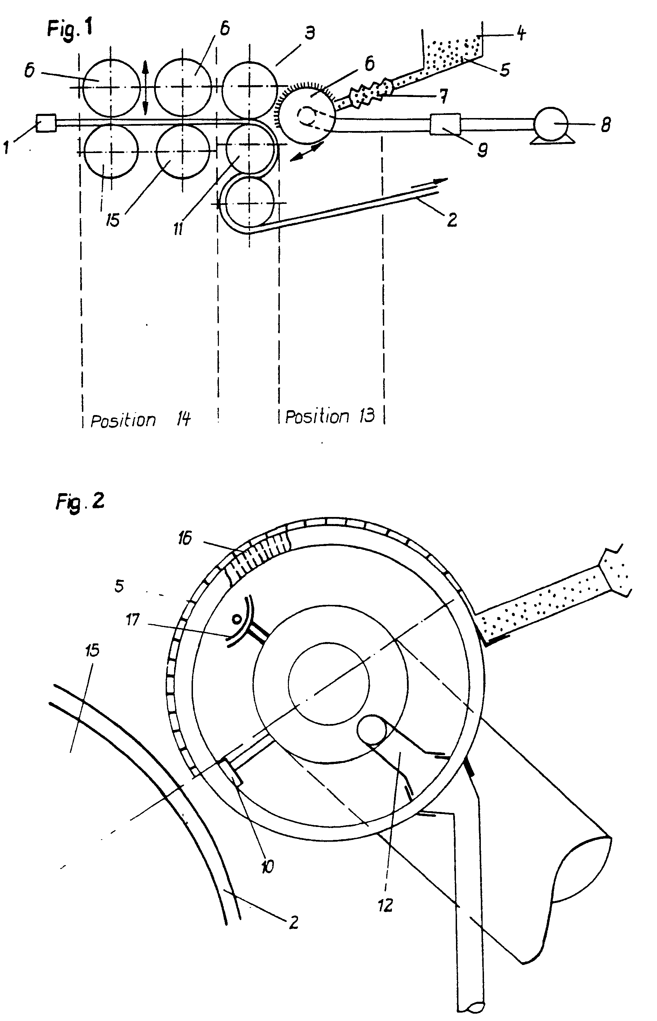

Durch den gegenüber der übrigen Hohlwalze 6 abgedichteten Druckluftreiniger 12 werden die Poren der Hohlwalze 6 von ggf. noch anhaftenden Modifikationsmaterialresten von innen durch Ausblasen gereinigt. Nach dieser Arbeitsphase wird die äußere Oberfläche des Hohlwalzenmantels beim Vorbeigang an der flexiblen Übergabevorrichtung 7 neu beschichtet. Erreicht die Linie der thermoplastischen Folienbahn 2, die das Ende des zu modifizierenden Bereiches bildet, die Linie des kürzesten Abstandes von Hohlwalze 6 und Gegenwalse 11, hebt die Hohlwalze 6 wieder ab. Dabei setzt ihre Rotation aus. Je nach benötigter Materialtemperatur und Anzahl der modifizierenden Bereiche können die Hohlwalzen 6 in Position 13 und/oder Position 14 angebracht sein. Zur besseren Übersichtlichkeit wird in Fig. 2 auf die Darstellung der Anlagenteile 4; 5; 7; 8; 9 verzichtet. Bei Anbringen der Position 14 ist ggf. gegenüber der Hohlwalze 6 eine Gegenwalze 15 vorzusehen, die den Andruck der Hohlwalze 6 ausgleicht. Der Andruck der Hohlwalze 6 ist hierbei so einzustellen, daß es zu keiner wesentlichen Verringerung der Dicke der Folienbahn 2 kommt. Die intensive Einarbeitung des Modifikationsmaterials 5 in die Folienbahn 2 erfolgt in jedem Falle im anschließenden Kalanderprozeß. Die Temperierung des Walzenmantels und damit des Modifikationsmaterials erfolgt mittels IR-Strahler 17.

Die Übergabe der Modifikationsmaterialien mit für die Handhabung in elektrischen bzw. magnetischen Feldern geeigneten Substraten kann wie bei der Vakuumwalze technologisch durch Anlegen der mit dem elektrisch fixierten Modifizierungsmaterial beschichteten Walze an die Belegbahn erfolgen. Bei dieser Verfahrensweise erfolgen Profilieren und Modifizieren in einer Prozeßstufe.

Möglich ist auch das Abrufen des Modifizierungsmaterials von der Oberfläche der sich durch Drehung ständig neu beschichtende Modifizierungswalze mittels eines elektrischen Gitters zwischen Skibelag und der Modifizierungswalze als Gegenelektrode. Diese Modifizierung erfolgt hinsichtlich der Prägung in einer vorgelagerten Prozeßstufe. Außer der Fixierung des Modifizierungsmaterials mittels Vakuum oder elektrischer bzw. elektromagnetischer Kräfte auf dem Modifizierungswerkzeug ist durch die Fixierung des Modifizierungsmaterials auf dem Modifizierungswerkzeug durch Auftragen eines Haftmittels z. B. einer Flüssigkeit auf der Werkzeugoberfläche möglich.

Die erfindungsgemäße Lösung ermöglicht es, einen Skibelag herzustellen, dessen Oberfläche erstmalig in rationeller Weise sowohl im Gleit- als auch im Steigbereich modifiziert und damit den unterschiedlichsten Eigenschaftsanforderungen anpaßbar ist. Das bisher seitens der Anwender notwendige Präparieren des Belages, das zu ähnlichen Ergebnissen, bei allerdings bedeutend kostenungünstigeren Materialien, führt, entfällt. Durch die Wahl der Modifizierunggsmaterialien und der Hilfsstoffe ist eine lange Lebensdauer bei hoher Eigenschaftskonstanz erreichbar und im Schneetest in einfacher Weise nachgewiesen worden. Die verringerte Profilhöhe erlaubt einen Gleitvorgang, der dem bei unprofilierten Rennbelägen nahe kommt.

**Patentansprüche**

1. Verfahren zur Herstellung von Skilaufsohlenbelägen aus auf der Grundlage an sich bekannter Verfahren der Extrusions- und Kalandiertechnik hergestellten Thermoplastbahnen (2), auf die bei Temperaturen von 70° C bis 250° C Modifikationsmaterialien (5) aufgebracht und eingewalzt werden, dadurch gekennzeichne daß das Modifikationsmaterial (5) über eine oder mehrere im Bereich eines Kalanders (3) angeordnete, mit einer Steuerung zum wegabhängigen Anlegen und Abheben von einer Gegenwalze (15) verbundenen vakuumbeaufschlagten Hohlwalze (6) auf die Thermoplastbahn (2) aufgebracht wird, wobei das Modifikationsmaterial (5) durch die Vakuumbeaufschlagung der Hohlwalze (6) aus einer Materialbevorratungs- und Übergabevorrichtung (4; 7) entnommen wird, sich bei Drehung der Hohlwalze (6) über den Umfang ausdehnt und bei Erreichen des vorbestimmten Modifikationsbereiches der Thermoplastbahn (2) auf diese bei gleicher Umfansgeschwindigkeit der Hohlwalze (6) auf der auf den Kalander (3) gefürten Thermoplastbahn (2) übertragen wird und der Übertragungsvorgang nach Durchlauf des Modifikationsbereiches nach Absetzen und Beendigung der Drehbewegung der Hohlwalze (6) beendet ist, und daß die so ausgerüstete Thermoplastbahn (2) zur intensiven Einarbeitung des Modifikationsmaterials (5) dem anschließenden Kalanderprozeß zugeführt wird.

2. Verfahren nach Anspruch 1, dadurch gekennzeichnet, daß die Steuerun der Hohlwalze (6) etappenweise erfolgt, wobei nach Vakuumbeaufschlagung die Hohlwalze (6) zur Aufnahme des Modifikationsmaterials (5) an der Materialbevorratungs- und Übergabevorrichtung (4; 7) vorbeigeführt und bei Erreichen des Modifikationsbereiches der durch den Kalander (3) geführten Thermoplastbahn (2) auf der Linie des kürzesten Abstandes der Gegenwalze (15) von der Hohlwalze (6), deren Vakuumbeaufsclagung unterbrochen wird, auf die Termoplastbahn (2) unter gleichzeitiger Aufnahme der Rotationsbewegung abgelegt und nach Durchlauf des Modigizierungsbereiches auf der Linie des kürzesten Abstandes der Gegenwalze (15) und der Hohlwalze (8) bei Beendigung der Rotationsbewegung abgehoben wird.

3. Verfahren nach Anspruch 1, dadurch gekennzeichnet, daß unterschiedliche Modifizierungsmaterialien (5) über voneinander unabhängigs Hohlwalzen (6) bereichsweise beidseitig auf den Modifizierungsbereich der Thermoplastbahn (2) aufgetragen und eingearbeitet werden.

## Claims

1. A method for the manufacture of ski bottom coatings from thermoplastic webs (2) made the basis of extrusoin and calendering techniques known per se, to which webs modification materials (5) are applied and rolled in at temperatures of 70°C to 250°C, characterized in that the modification material (5) is applied to the thermoplastic web (2) by means of one or several vacuum-exposed hollow roll(s) (6) which is (are) arranged whithin the region of a çalender (3) and connected with a control for path-dependent movement to and away from a counterroll (15), the modification material (5) being taken from a material holding and supplying means (4; 7) by the vacuum applied to the hollow roll (6), distributed over the circumference of the hollow roll (6) during its rotation and - when the predetermined modification area of the thermoplastic web (2) is reached - being applied to it at equal peripheral speed of the hollow (6) to the thermoplastic web (2) passed to calender (3) the application process being terminated after passing the modification area when the hollow roll (6) has been moved away and its rotation stopped, and that the thermoplastic web (2) treated in this way is fed to the subsequent calendering procedure for intensively working in the modification material (5).

2. A mathod according to claim 1, characterized in that the control of the hollow roll (6) is stage by stage, the hollow roll (6) after application of vacuum to it - passing the material holding and supplying means (4; 7) for taking up the modification material (5) and - upon arriving at the modification area of the thermoplastic web (2) led through the calender (3) - being moved to the thermoplastic web (2) on the line of the shortest distance of the counteroll (15) from the hollow roll (6) whose exposure to vacuum is interrupted, while it simullaneously starts to rotate, and - after passing the modification area - being moved away on the line of the shortest distance between the counterroll (15) and the hollow roll (6) which stops to rotate.

3. A method according to claim 1, characterized in that different modification materials (5) are sectionwise applied to both sides of and worked in the modification area of the thermoplastic web (2) by means of hollow rolls (6) which are independent of each other.

## Revendications

1. Procédé pour fabriquer des revêtements de semelles de skis à partir de bandes de thermoplastes (2), fabriquées par des procédés connus en eux-mêmes fondamentalement, qui appartiennent à la technique de l'extrusion et du calandrage, et sur lesquelles on dépose, et on fait pénétrer par calandrage, des matières modificatrices (5) à des températures de 70°C à 250°C, caractérisé en ce que la matière modificatrice (5) est déposée sur la bande de thermoplaste au moyen d'un ou de plusieurs rouleaux creux (6) agencés dans la région d'une calandre (3), attaqués par une dépression et relié(s) à une commande servant à le ou les mettre en appui contre un contre-rouleau (15) ou à l'écarter ou les écarter de ce contre-rouleau en réponse au défilement, la matière modificatrice est tirée d'un dispositif d'alimentation et d'amenée de la matière (4; 7) par la dépression appliquée au rouleau creux (6), elle s'étale sur la périphérie pendant la rotation du rouleau creux (6) et, lorsqu'on atteint la zone de modification prédéterminée de la bande de thermoplaste (2), cette matière est reportée sur cette bande de thermoplaste qui passe sur la calandre (3), avec une vitesse circonférentielle du rouleau creux (6) égale à celle de la bande, et l'opération de report est interrompue lorsque la zone de modification a été parcourue, après l'écartement et l'arrêt de la rotation du rouleau creux (6), et en ce que la bande de thermoplaste (2) ainsi travaillée est envoyée à l'opération de calandrage qui fait suite pour l'incorporation intensive de la matière modificatrice (5).

2. Procédé selon la revendication 1, caractérisé en ce que la commande du rouleau creux (6) se produit par étapes, en ce sens que, après l'application de la dépression, le rouleau creux (6) passe au droit du dispositif d'alimentation et d'amenée de la matière (4; 7) pour recevoir la matière modificatrice (5) et que, lorsque la zone de modification de la bande de thermoplaste qui passe dans la calandre (3) atteint la ligne d'écartement minimal entre le contre-rouleau (15) et le rouleau creux (6), le rouleau creux, dont l'alimentation en dépression est interrompue, est appliqué contre la bande de thermoplaste, en reprenant en même temps le mouvement de rotation, puis, lorsque la zone de modification est entièrement passée sur la ligne d'écartement minimal entre le contre-rouleau (15) et le rouleau creux (8), le rouleau creux (8) est écarté, avec interruption du mouvement de rotation.

3. Procédé selon la revendication 1, caractérisé en ce que des matières modificatrices (5) différentes sont déposées et incorporées sur la zone de modification de la bande de thermoplaste (2), sur les deux faces et par zones, au moyen de rouleaux creux (6) indépendants l'un de l'autre.

EP 0 171 549 B1

Fig. 1

Position 14    Position 13

Fig. 2